# EUROPEAN PATENT APPLICATION

(11) **EP 3 205 486 A1**
(43) Date of publication of application: **16.08.2017**
(21) Application number: 17155987.5
(22) Date of filing: 14.02.2017
(51) Int. Cl.: B29C 70/42, B29C 33/38, B29C 35/02, B29C 33/00, B29C 33/02, B28B 7/42, B29C 33/76, B29C 70/88, B29C 70/44, B29C 70/08, B64D 15/12, H05B 3/14, B29C 35/08

(54) **INTEGRATED CONDUCTIVE FOAM CORE FOR COMPOSITE PROCESSING**

(30) Priority: 15.02.2016 US 201615043651
(71) Applicant: General Electric Company, Schenectady, NY 12345 (US)
(72) Inventor: SELLINGER, Aaron Todd, Cincinnati, OH 45215 (US)
(74) Representative: Williams, Andrew Richard

(57) **Abstract**

The present disclosure is directed to a method for forming a cured composite component 100. The method includes laying one or more layers of uncured composite material onto a conductive core 102. An electric current is supplied to the conductive core to resistively heat the one or more layers of uncured composite material to a temperature sufficient to cure the one or more layers of uncured composite material into the cured composite component 108.

## Description

### FIELD

The present disclosure generally relates to a method of forming a composite component and, more particularly, a method of forming a composite component using resistive heating.

### BACKGROUND

Many aircraft components (e.g., airfoils, ducts, panels, etc.) are typically constructed from composite materials such as polymeric matrix composites and ceramic matrix composites. Generally, such composite components are formed by placing uncured composite material into a mold or onto a mandrel having the desired shape of the finished composite component. The mold/mandrel and the uncured composite material are then placed into an oven or an autoclave, which heats the uncured composite material to a temperature sufficient for curing thereof.

Nevertheless, curing the uncured composite material in an oven or an autoclave is an expensive and time-consuming process. More specifically, the oven/autoclave takes a long time to reach the proper temperature before the uncured composite component may be placed therein. Similarly, the oven/autoclave also takes a long time to cool to a safe temperature before the cured composite component may be removed therefrom. This heating and cooling time greatly increases the cycle time necessary to make composite components using conventional methods. This increased cycle time increases the manufacturing cost of the composite component. Accordingly, a method of forming a composite component that does not require the use of an oven or an autoclave for curing thereof would be welcomed in the technology.

### BRIEF DESCRIPTION

Aspects and advantages of the invention will be set forth in part in the following description, or may be obvious from the description, or may be learned through practice of the invention.

In one aspect, the present disclosure is directed to a method for forming a cured composite component. The method includes laying one or more layers of uncured composite material onto a conductive core. An electric current is supplied to the conductive core to resistively heat the one or more layers of uncured composite material to a temperature sufficient to cure the one or more layers of uncured composite material into the cured composite component.

Another aspect of the present disclosure is directed to a self-heating component for an aircraft. The self-heating component includes a conductive core. One or more cured composite walls enclose the conductive core. The conductive core resistively heats the one or more cured composite walls when an electric current is supplied to the conductive core.

These and other features, aspects and advantages of the present invention will become better understood with reference to the following description and appended claims. The accompanying drawings, which are incorporated in and constitute a part of this specification, illustrate aspects of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended FIGS., in which:
FIG. 1 is a schematic view a conductive core for use in forming a composite component in accordance with the embodiments disclosed herein;
FIG. 2 is a flow chart illustrating an exemplary method of forming a composite component in accordance with the embodiments disclosed herein;
FIG. 3 is a schematic view of the conductive core shown in FIG. 1, illustrating one or more layers of uncured composite material wrapped around the conductive core;
FIG. 4 is a schematic view of an alternate embodiment of the conductive core shown in

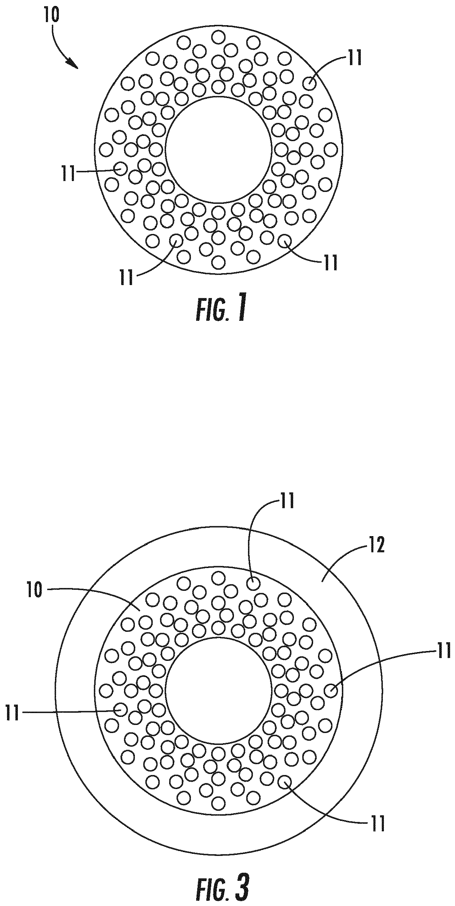

FIGS. 1 and 3, illustrating the conductive core placed between a first set of the one or more layers of uncured composite material and a second set of the one or more layers of uncured composite material;

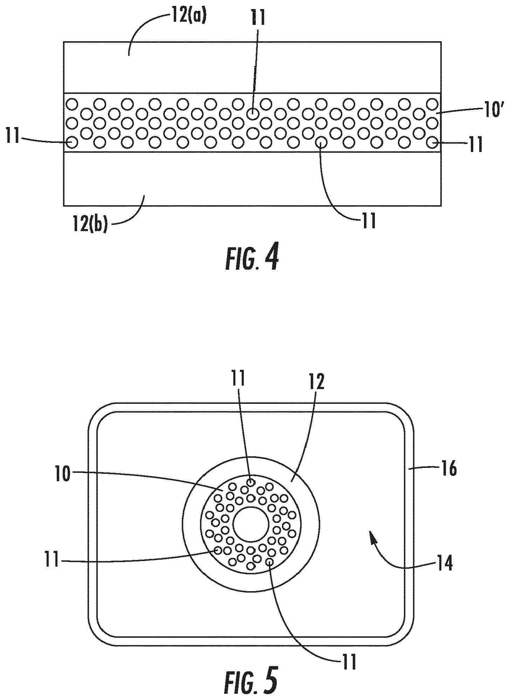

FIG. 5 is a schematic view of a vacuum bag into which the conductive core and the one or more layers of uncured composite material shown in FIG. 3 are placed;

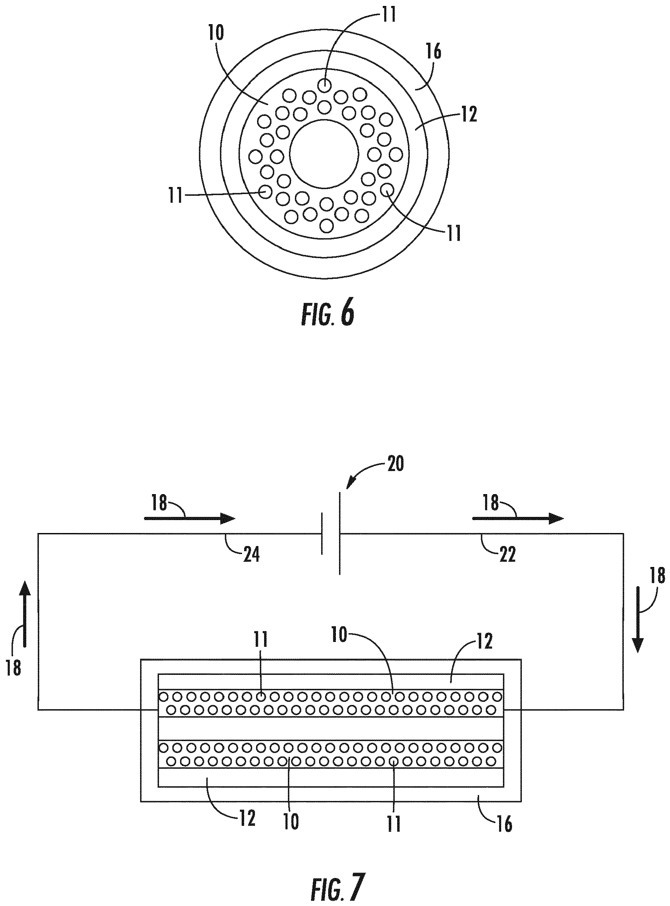

FIG. 6 is a schematic view of the vacuum bag, the conductive core, and the one or more layers of uncured composite material shown in FIG. 5, illustrating the vacuum bag exerting pressure on the conductive core and the one or more layers of uncured composite material;
FIG. 7 is a schematic view of the vacuum bag, the conductive core, and one or more layers of uncured composite material shown in FIGS. 5 and 6, illustrating a power supply for supplying electric current to the conductive core;

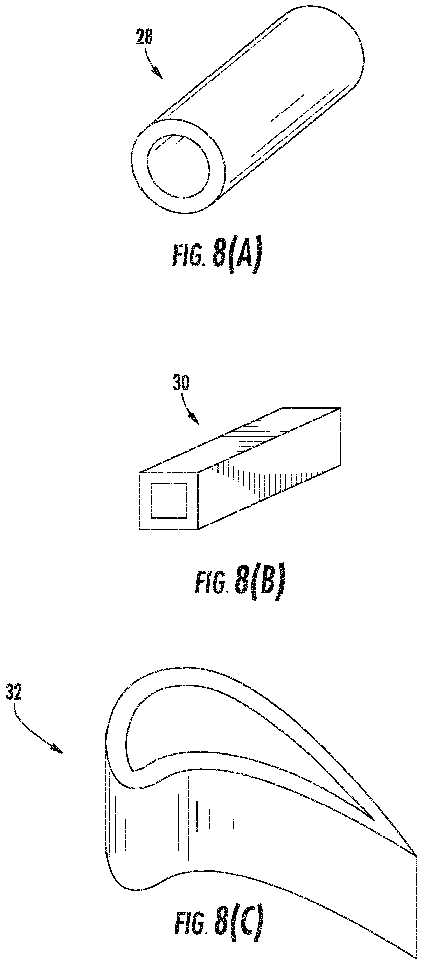

FIG. 8(A) is a perspective view of a tube formed in accordance with the embodiments disclosed herein, the tube having the conductive core removed therefrom;
FIG. 8(B) is a perspective view of a duct formed in accordance with the embodiments disclosed herein, the duct having the conductive core removed therefrom;
FIG. 8(B) is a perspective view of an airfoil formed in accordance with the embodiments disclosed herein, the airfoil having the conductive core removed therefrom;

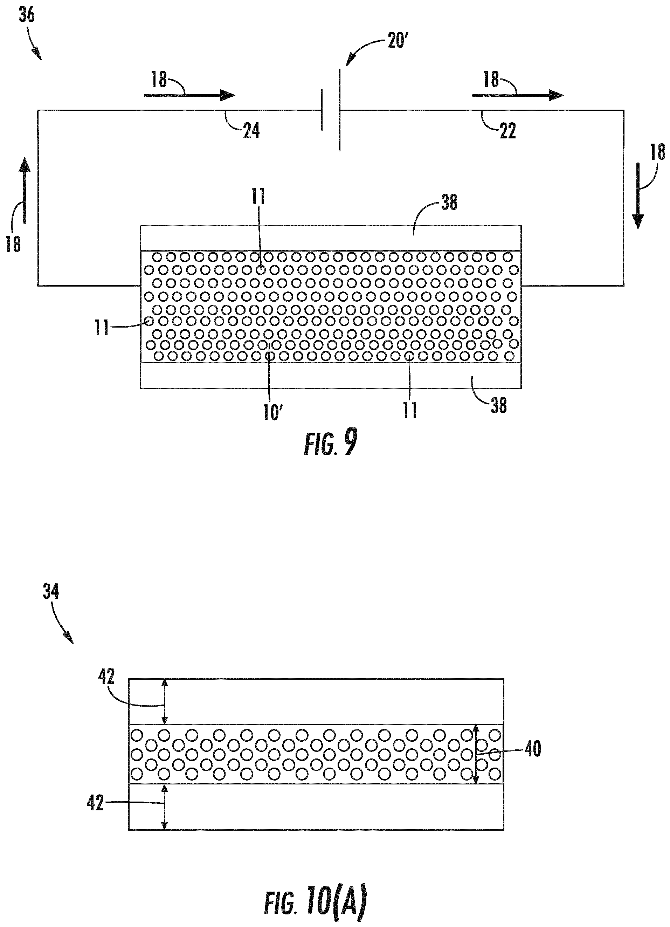

FIG. 9 is a schematic view of a self-heating component in accordance with the embodiments disclosed herein;
FIG. 10(A) is a perspective view of a self-heating panel formed in accordance with the embodiments disclosed herein;

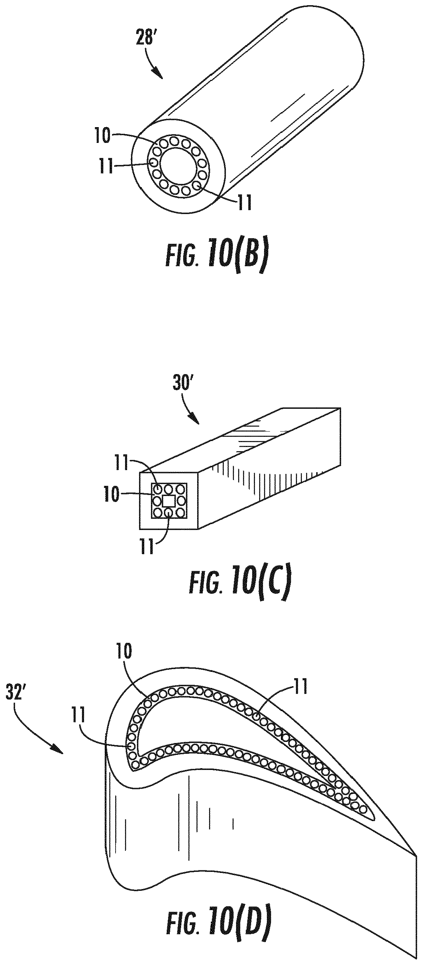

FIG. 10(B) is a perspective view of a self-heating tube formed in accordance with the embodiments disclosed herein;
FIG. 10(C) is a perspective view of a self-heating duct formed in accordance with the embodiments disclosed herein; and
FIG. 10(D) is a perspective view of a self-heating airfoil formed in accordance with the embodiments disclosed herein.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the term "polymer" generally includes, but is not limited to, homopolymers; copolymers, such as, for example, block, graft, random and alternating copolymers; and terpolymers; and blends and modifications thereof. Furthermore, unless otherwise specifically limited, the term "polymer" shall include all possible geometrical configurations of the material. These configurations include, but are not limited to isotactic, syndiotactic, and random symmetries.

As used herein, "glass transition temperature" refers to the temperature at which an amorphous polymer or an amorphous portion of a crystalline polymer transitions from a hard and brittle glassy state to a rubbery state. For example, the glass transition temperature (T_{g}) may be determined by dynamic mechanical analysis (DMA) in accordance with ASTM E1240-09. A Q800 instrument from TA Instruments may be used. The experimental runs may be executed in tension/tension geometry, in a temperature sweep mode in the range from -120° C to 150° C with a heating rate of 3° C/min. The strain amplitude frequency may be kept constant (2 Hz) during the test. Three (3) independent samples may be tested to get an average glass transition temperature, which is defined by the peak value of the tan δ curve, wherein tan δ is defined as the ratio of the loss modulus to the storage modulus (tan δ = E"/E').

As used herein, the prefix "nano" refers to the nanometer scale (e.g., from about 1 nm to about 999 nm). For example, particles having an average diameter on the nanometer scale (e.g., from about 1 nm to about 999 nm) are referred to as "nanoparticles".

In the present disclosure, when a layer is being described as "on" or "over" another layer or a mandrel, it is to be understood that the layers can either be directly contacting each other or have another layer or feature between the layers, unless expressly stated to the contrary. Thus, these terms are simply describing the relative position of the layers to each other and do not necessarily mean "on top of' since the relative position above or below depends upon the orientation of the device to the viewer.

The methods of forming a composite component disclosed herein include laying one or more layers of uncured composite material onto a conductive core. An electric current is supplied to the conductive core to resistively heat the one or more layers of uncured composite material to a temperature sufficient for curing thereof. In this respect, the methods disclosed herein do not require the use of an oven or autoclave for curing, thereby reducing the cycle time and the manufacturing cost of producing composite components compared to conventional methods.

FIG. 1 illustrates one embodiment of a conductive core 10 for use in forming a composite component. In the embodiment shown in FIG. 1, the conductive core 10 is formed of a conductive foam having a plurality of pores 11 therein. As used herein, "foam" refers to any material having an interconnected network of pores. The conductive foam may be a graphitic carbon foam or a non-graphitic carbon foam. In some embodiments, the conductive foam core 10 is constructed from a coal-based, non-graphitic carbon foam. Nevertheless, the conductive core 10 may be any suitable conductive material. In the embodiment shown in FIG. 1, for example, the conductive foam core 10 may have an annular shape for forming a tube-like component. Although, the conductive foam core 10 may have any suitable shape (e.g., curved, etc.) for forming the desired composite component.

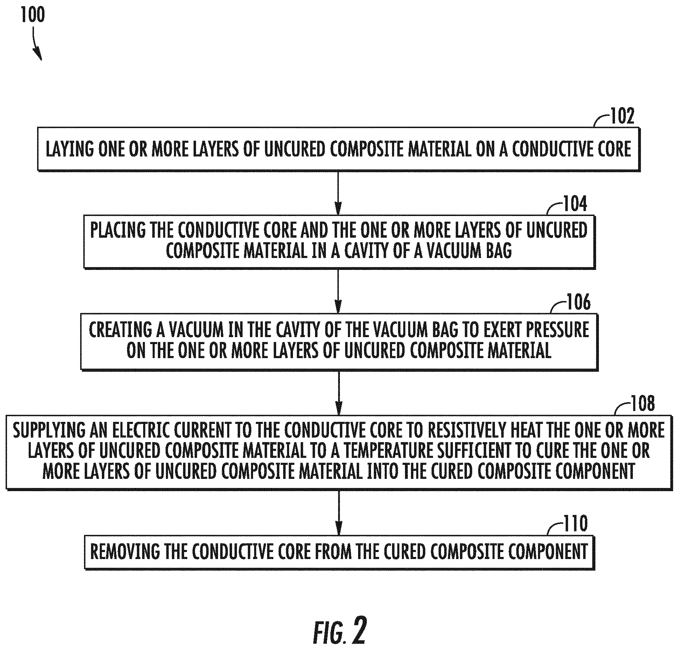

FIG. 2 is a flow chart illustrating an exemplary method (100) of forming a composite component in accordance with the embodiments disclosed herein. FIGS. 3-8 illustrate various steps and aspects of the method (100).

Referring to FIGS. 2-4, one or more layers of uncured composite material 12 are laid onto the conductive core 10 in step (102). In the embodiment shown in FIG. 3, for example, the one or more layers of uncured composite material 12 are wrapped around the conductive core 10 to form a tube-like shape. In other embodiments, such as the one shown in FIG. 4, a plate-like conductive core 10' is placed between a first set of the one or more layers of uncured composite material 12(a) and a second set of the one or more layers of uncured composite material 12(b) to form a panel or plate-like component. Nevertheless, the one or more layers of uncured composite material 12 may be placed on the conductive core 10, 10' to form other shapes as well based on the particular shape of the conductive core 10, 10'.

The one or more layers of uncured composite material 12 may be a polymeric matrix composite ("PMC") material. The PMC material used may be a continuous fiber reinforced PMC material. For example, suitable continuous fiber reinforced PMC materials may include PMC materials reinforced with continuous carbon fibers, oxide fibers, silicon carbide monofilament fibers, and other PMC materials including continuous fiber lay-ups and/or woven fiber preforms. In other embodiments, the PMC material used may be a discontinuous reinforced PMC material. For instance, suitable discontinuous reinforced PMC materials may include particulate, platelet, whisker, chopped fiber, weave, braid, in situ, and nano-composite reinforced PMC materials. In particular embodiments, the PMC material may be a polyimide-based PMC. Although, any suitable polymeric matrix material may be used as well.

In alternate embodiments, the one or more layers of uncured composite material 12 may be a ceramic matrix composite ("CMC") material. The CMC material used may be a continuous fiber reinforced CMC material. For example, suitable continuous fiber reinforced CMC materials may include CMC materials reinforced with continuous carbon fibers, oxide fibers, silicon carbide monofilament fibers, and other CMC materials including continuous fiber lay-ups and/or woven fiber preforms. In other embodiments, the CMC material used may be a discontinuous reinforced CMC material or unreinforced silicon carbide slurry matrix plies. For instance, suitable discontinuous reinforced CMC materials may include particulate, platelet, whisker, chopped fiber, weave, braid, in situ, and nano-composite reinforced CMC materials. In particular embodiments, the CMC material may be an oxide-oxide CMC. Although, any suitable polymeric matrix material may be used as well.

Referring now to FIGS. 2 and 5, the conductive core 10 and the one or more layers of uncured composite material 12 are placed into a cavity 14 of a vacuum bag 16 in step (104). The vacuum bag 16 is preferably constructed from a suitable polymer. Although, the vacuum bag 16 may be formed from any suitable material. Some embodiments may not include step (104).

In step (106), a pump (not shown) or other similar device creates a vacuum (i.e., a pressure less than ambient) in the cavity 14 of the vacuum bag 16. In particular, the pump evacuates air from the from cavity 14, thereby causing the vacuum bag 16 to squeeze the conductive core 10 and the one or more layers of uncured composite material 12. As such, the vacuum bag 16 may exert pressure on the conductive core 10 and the one or more layers of uncured composite material 12. FIG. 6 illustrates the conductive core 10, the one or more layers of uncured composite material 12, and the vacuum bag 16 upon completion of step (106). Some embodiments may not include step (106).

Referring now to FIGS. 2 and 7, an electric current 18 is supplied to the conductive core 10 to resistively heat the one or more layers of uncured composite material 12 to a temperature sufficient for curing thereof in step (108). In particular, the temperature sufficient for curing the one or more layers of uncured composite material 12 is above the glass transition temperature of the one or more layers of uncured composite material 12. Step (108) is preferably performed while the vacuum bag 16 exerts pressure on the conductive core 10 and the one or more layers of uncured composite material 12. In this respect, the vacuum created in step (106), if applicable, assists in curing the one or more layers of uncured composite material 12.

More specifically with respect to step (108), a power supply 20 (e.g., a power grid, an electrical outlet, a battery, etc.) supplies the electric current 18 to the conductive core 10 via a first wire 22. The electric current 18 flows through the conductive core 10 and is returned to the power supply 20 or a ground (not shown) via a second wire 24. The internal resistance of the conductive core 10 creates a voltage drop across the conductive core 10, thereby creating heat. The amount of heat created increases as the voltage drop increases. This resistive heating increases the temperature of the conductive core 10, which, in turn, increases the temperature of the one or more layers of uncured composite material 12. After a sufficient period of time (e.g., 5 minutes to 30 minutes), the one or more layers of uncured composite material 12 attain the temperature sufficient for curing thereof. As such, step (108) transforms the one or more layers of uncured composite material 12 into a cured composite component 26. In some embodiments, the electric current 18 may be 10 Amps to 50 Amps, and the voltage drop may be 50 Volts to 100 Volts. Although, the electric current 18 and/or the voltage drop may be different in other embodiments.

The conductive core 10 is removed from the cured composite component 26 in step (110). Step (110) may be necessary if the cured composite component 26 is hollow. In alternate embodiments, however, the conductive core 10 remains in the cured composite component 26. Leaving the conductive core 10 in the cured composite component 26 increases strength compared to a comparable hollow composite component and reduces weight compared to a comparable solid composite component.

FIGS. 8(A-C) illustrate various embodiments of the cured composite component 26 after the conductive core 10 has been removed (i.e., upon completion of step (110)). Specifically, FIGS. 8(A-C) respectively illustrate a tube 28, a duct 30, and an airfoil 32. Nevertheless, the cured composite component 26 may have any suitable form or shape and may be any type of component. Moreover, the cured composite component 26 may include the conductive core 10 in certain embodiments. In some embodiments, the cured composite component 26 is an aircraft component (e.g., the airfoil 32). For example, the cured composite component 26 may be a gas turbine engine component. Although, the cured composite component 26 may be any component for use in any suitable application.

In embodiments where the conductive core 10, 10' remains in the cured composite component 26, the cured composite component 26 and the conductive core 10, 10' may collectively be used as a self-heating component 36. As illustrated in FIG. 9, the self heating component 36 includes one or more cured composite walls 38 that enclose the conductive core 10'. As such, the temperature of one or more cured composite walls 38 increases when the electric current 18 is supplied to the conductive core 10'. This feature is useful in de-icing applications, thereby eliminating the need from external heating and/or scraping operations. Some embodiments of the self-heating component 36 may be formed using the method (100) as described herein. Alternately, the self heating component 36 may be formed using an autoclave, oven, thermal press, or other suitable device or method.

The self-heating component 36 may be integrated into a gas turbine engine (not shown) or other aircraft component. In the embodiment shown in FIG. 10(A), the self-heating component 36 is a self-heating panel 34. As shown in FIG. 10(A), a thickness 40 of the conductive core 10' is greater than a thickness 42 of the one or more cured composite walls 38. Although, the conductive core thickness 40 may be less than or the same as the cured composite wall thickness 42. In other embodiments shown in FIGS. 10(B-D), the self-heating component 36 is respectively a self-heating tube 28', a self-heating duct 30', or a self-heating airfoil 32'. As shown in FIGS. 10(B-D), each of the self-heating tube 28', the self-heating duct 30', and the self-heating airfoil 32' include the composite core 10 unlike the tube 28, the duct 30, or the airfoil 32 shown in FIGS. 8(A-C). Although the self-heating component 36 will be discussed below in the context of a gas turbine engine component, the self-heating component 36 may be any type of component and may be used in any type of application.

Referring again to FIG. 9, an aircraft power supply 20' (e.g., a battery, an alternator, a generator, etc.) supplies the electric current 18 to the conductive core 10' of the self heating component 36 via the first wire 22. The electric current 18 flows through the conductive core 10' and is returned to the aircraft power supply 20' or a ground (e.g., a turbine engine frame) via the second wire 24. The internal resistance of the conductive core 10' creates a voltage drop across the conductive core 10', thereby producing heat. This resistive heating increases the temperature of the conductive core 10', which, in turn, increases the temperature of the one or more cured composite walls 38. In this respect, the self-heating composite component 36 operates in a similar manner as described above with respect to step (108) of the method (100).

The aforementioned heating of the one or more cured composite walls 38 may be used for de-icing the self-heating component 36. More specifically, the this heating may raise the temperature of the one or more cured composite walls 38 to a temperature sufficient to melt and/or vaporize ice, frost, water, and/or other similar substances deposited on the self-heating component 36 during cold and/or humid ambient conditions. Even if the self-heating component 36 is not subject to icing or frosting, the self-heating component 36 may pre-heat itself to avoid incurring thermal stresses upon rapid heating (e.g., gas turbine engine start-up).

As mentioned above, the amount of heat created by the conductive core 10' increases as the voltage drop across the conductive core 10' increases. Typically, less heat is necessary for de-icing the self-heating component 36 than is required to cure the one or more layers of uncured composite material 12. In this respect, the electric current 18 and/or the voltage drop across the conductive core 10' in the self-heating component 36 may be less than in step (108) of the method (100). In some embodiments of the self-heating component 36, for example, the electric current 18 may be 1 Amp to 10 Amps, and the voltage drop may be 5 Volts to 50 Volts. Although, the electric current 18 and/or the voltage drop may be different in other embodiments.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A method for forming a cured composite component, comprising:
   laying one or more layers of uncured composite material onto a conductive core; and
   supplying an electric current to the conductive core to resistively heat the one or more layers of uncured composite material to a temperature sufficient to cure the one or more layers of uncured composite material into the cured composite component.
2. The method of clause 1, further comprising:
   placing the conductive core and the one or more layers of uncured composite material in a cavity of a vacuum bag; and
   creating a vacuum in the cavity of the vacuum bag to exert pressure on the one or more layers of uncured composite material while supplying the electric current to the conductive core.
3. The method of any preceding clause, further comprising:
   removing the conductive core from the cured composite component.
4. The method of any preceding clause, wherein the conductive core remains in the cured composite component.
5. The method of any preceding clause, wherein the conductive core comprises a conductive foam.
6. The method of any preceding clause, wherein the conductive core comprises a carbon foam.
7. The method of any preceding clause, wherein laying the one or more layers of uncured composite material onto the conductive core comprises wrapping the one or more layers of uncured composite material around the conductive core.
8. The method of any preceding clause, wherein laying the one or more layers of uncured composite material onto the conductive core comprises placing the conductive core between a first set of the one or more layers of uncured composite material and a second set of the one or more layers of uncured composite material.
9. The method of any preceding clause, wherein the one or more layers of uncured composite material comprise a polymeric matrix composite.
10. The method of any preceding clause, wherein the one or more layers of uncured composite material comprise a ceramic matrix composite.
11. A self-heating component for an aircraft, comprising:
   a conductive core; and
   one or more cured composite walls enclosing the conductive core;
   wherein the conductive core resistively heats the one or more cured composite walls when an electric current is supplied to the conductive core.
12. The self-heating component of any preceding clause, wherein the conductive core comprises a conductive foam.
13. The self-heating component of any preceding clause, wherein the conductive foam core comprises a carbon foam.
14. The self-heating component of any preceding clause, wherein the conductive core and the one or more cured composite walls comprise a tube.
15. The self-heating component of any preceding clause, wherein the conductive core and the one or more cured composite walls comprise a panel.
16. The self-heating component of any preceding clause, wherein the conductive core and the one or more cured composite walls comprise an airfoil.
17. The self-heating component of any preceding clause, wherein the conductive core resistively heats the one or more cured composite walls to a temperature sufficient to de-ice the self-heating component.
18. The self-heating component of any preceding clause, wherein the one or more cured composite walls comprise a polymeric matrix composite.
19. The self-heating component of any preceding clause, wherein the one or more cured composite walls comprise a ceramic matrix composite.
20. The self-heating component of any preceding clause, wherein the conductive core comprises a thickness that is greater than a thickness of the one or more cured composite walls.

## Claims

1. A method for forming a cured composite component (100), comprising:
laying one or more layers of uncured composite material onto a conductive core (102); and
supplying an electric current to the conductive core to resistively heat the one or more layers of uncured composite material to a temperature sufficient to cure the one or more layers of uncured composite material into the cured composite component (108).

2. The method (100) of claim 1, further comprising:
placing the conductive core and the one or more layers of uncured composite material in a cavity of a vacuum bag (104); and
creating a vacuum in the cavity of the vacuum bag to exert pressure on the one or more layers of uncured composite material while supplying the electric current to the conductive core (106).

3. The method (100) of either of claim 1 or 2, further comprising:
removing the conductive core from the cured composite component (110).

4. The method (100) of any preceding claim, wherein the conductive core remains in the cured composite component.

5. The method (100) of any preceding claim, wherein the conductive core comprises a conductive foam.

6. The method (100) of claim 5, wherein the conductive core comprises a carbon foam.

7. The method (100) of any preceding claim, wherein laying the one or more layers of uncured composite material onto the conductive core (102) comprises wrapping the one or more layers of uncured composite material around the conductive core.

8. The method (100) of any preceding claim, wherein laying the one or more layers of uncured composite material onto the conductive core (102) comprises placing the conductive core between a first set of the one or more layers of uncured composite material and a second set of the one or more layers of uncured composite material.

9. The method (100) of any preceding claim, wherein the one or more layers of uncured composite material comprise a polymeric matrix composite or a ceramic matrix composite.

10. A self-heating component (36) for an aircraft, comprising:
a conductive core (10, 10'); and
one or more cured composite walls (38) enclosing the conductive core (10, 10');
wherein the conductive core (10, 10') resistively heats the one or more cured composite walls (38) when an electric current (18) is supplied to the conductive core (10, 10').

11. The self-heating component of claim 10, wherein the conductive core comprises a conductive foam.

12. The self-heating component of claim 11, wherein the conductive foam core comprises a carbon foam.

13. The self-heating component of any of claims 10 to 12, wherein the conductive core and the one or more cured composite walls comprise a tube.

14. The self-heating component of any of claims 10 to 13, wherein the conductive core and the one or more cured composite walls comprise a panel.

15. The self-heating component of any of claims 10 to 14, wherein the conductive core and the one or more cured composite walls comprise an airfoil.
